(19) Europäisches Patentamt
European Patent Office
Office européen des brevets

(11) **EP 3 163 537 A1**

(12) **EUROPEAN PATENT APPLICATION**

(43) Date of publication:
**03.05.2017 Bulletin 2017/18**

(51) Int Cl.:
***G06T 15/50*** *(2011.01)*

(21) Application number: **15306733.5**

(22) Date of filing: **30.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(72) Inventors:
• **DUFAY, Arthur**
  **35576 Cesson-Sévigné (FR)**
• **LECOCQ, Pascal**
  **35576 Cesson-Sévigné (FR)**
• **MARVIE, Jean-Eudes**
  **35576 Cesson-Sévigné (FR)**

(74) Representative: **Huchet, Anne**
  **TECHNICOLOR**
  **1-5, rue Jeanne d'Arc**
  **92130 Issy-les-Moulineaux (FR)**

(71) Applicant: **Thomson Licensing**
  **92130 Issy-les-Moulineaux (FR)**

(54) **METHOD AND APPARATUS FOR DETERMINING ACCURATE AREA LIGHT ILLUMINATION USING ELLIPSOID BASED FUNCTIONS**

(57)    A glossy part of a radiation coming from a surface illuminated by area light source(s) (21) having source surface(s) (A) bounded by edge curves (210) is estimated, by determining integrand function(s) representative of that glossy part, the latter corresponding to an integration of the integrand function along the edge curves. In this respect, the integrand function(s) is/are approximated by means of at least one ellipsoid-based-peak-shape function(s) having a null first derivative in the integration domain bounds, and the glossy part is computed from analytical expressions associated with integrations of the ellipsoid-based-peak-shape function(s) along the edge curves weighted by a factor for best fitting in the tail.

FIG. 5C

Printed by Jouve, 75001 PARIS (FR)

**Description**

**TECHNICAL FIELD**

The present principles relate generally to scene evaluation and characterization and, more particularly, to a method and apparatus for determining area light illumination using ellipsoid-based functions.

**BACKGROUND**

Accurate real-time rendering of specular surfaces is a challenging task when considering area light source illumination. The difficulty resides in the evaluation of a surface integral for which no practical solution exists except using expensive methods such as the Monte Carlo methods. Recent techniques like the most representative point approach alleviates this problem but makes some accuracy trade-off to achieve real-time performance. In addition, a new approach has been introduced based on contour integration and analytic approximations of the specular radiance integral using simple peak functions. The solution provides real-time performances using a combination of two simple integrable peak functions. The solution is accurate but shows some light leak artifacts when boosting the area light luminance or when using some tone mapping operators like gamma correction. Such light leaks can be discarded using a combination of three (3) peak functions but this solution introduces non-negligible computational overhead.

**SUMMARY OF THE INVENTION**

These and other drawbacks and disadvantages of the prior art are addressed by the present principles, which are directed at a method and apparatus for determining area light illumination using ellipsoid-based functions. In accordance with embodiments of the present principles, the integrand, I, is approximated as an ellipsoid-based peak shape function, which relies on a complex expression with no indefinite integral. In various embodiments, an idea is to approximate the integrand, I, using a simpler peak shape function described by a rational expression with indefinite integral.

In one embodiment of the present principles a method for determining area light illumination using ellipsoid-based functions includes approximating at least one integrand function ($I$) by means of at least one ellipsoid-based-peak-shape function ($P$) having a null first derivative in the integration domain bounds and computing the glossy part ($L$) from analytical expressions associated with integrations of said at least one ellipsoid-based-peak-shape functioin ($P$) along said edge curves (210, $U_jU_{j+1}$), weighted by a factor ($\alpha$) for best fitting in the tail.

In an alternate embodiment of the present principles, an apparatus for determining area light illumination using ellipsoid-based functions includes a memory storing control programs, instructions, software, content and data and a processor executing the control programs and instructions. In such embodiments, the processor, when executing the control programs causes the apparatus approximate at least one integrand function ($I$) by means of at least one ellipsoid-based-peak-shape function ($P$) having a null first derivative in the integration domain bounds and compute the glossy part ($L$) from analytical expressions associated with integrations of the at least one ellipsoid-based-peak-shape function ($P$) along said edge curves (210, $U_jU_{j+1}$) weighted by a factor ($\alpha$) for best fitting in the tail.

**BRIEF DESCRIPTION OF THE DRAWINGS**

The teachings of the present invention can be readily understood by considering the following detailed description in conjunction with the accompanying drawings, in which:

FIG. 1 depicts a high level block diagram of a rendering device for implementing the features of the present principles in accordance with an embodiment of the present principles;
FIG. 2 depicts a physical configuration of a surface, in which area light illumination (specular component) can be determined in accordance with an embodiment of the present principles;
FIG. 3 depicts the physical configuration of FIG. 2 including mathematical expressions implemented in determining area light illumination in accordance with an embodiment of the present principles;
FIG. 4a depicts a graphical representation of an ellipse parameterization in accordance with an embodiment of the present principles;
FIG. 4b depicts a graphical representation of an ellipsoid based peak function in accordance with an embodiment of the present principles;
FIG. 5a, 5b and 5c depict flow diagrams of a process for determining accurate area light illumination using ellipsoid based functions in accordance with an embodiment of the present principles;
FIG. 6 depicts a table including rendering times and error measurements obtained with the ellipsoid approximations of the present principles compared to other methods for a specular sphere illuminated by two area lights;

FIG. 7 depicts the corresponding rendered images of the illuminated spheres of FIG. 6; and
FIG. 8 depicts a high level block diagram of a rendering device for implementing the features of the present principles in accordance with an alternate embodiment of the present principles.

To facilitate understanding, identical reference numerals have been used, where possible, to designate identical elements that are common to the figures. The drawings are not to scale, and one or more features may be expanded or reduced for clarity.

## DETAILED DESCRIPTION

Embodiments of the present principles advantageously provide a method and apparatus for determining area light illumination using ellipsoid-based functions. Although the present principles will be described primarily within the context of determining the area light illumination of a sphere being illuminated with two area lights, the specific embodiments of the present principles should not be treated as limiting the scope of the invention. It will be appreciated by those skilled in the art and informed by the teachings of the present principles that the concepts of the present principles can be advantageously applied in any environment and for any shape object for determining area light illumination for any number of area lights using ellipsoid-based functions in accordance with embodiments of the present principles.

Embodiments of the present principles are directed to solving the problem of light leaks observed in real-time rendering of specular surfaces based on contour integration and analytic approximations of the specular radiance integral using simple peak functions without introducing any computational overhead. Various embodiments of the present principles are based on the use of a new set of functions built upon ellipsoid of revolution giving an accurate approximation of the contour integration using a simple combination of peak functions.

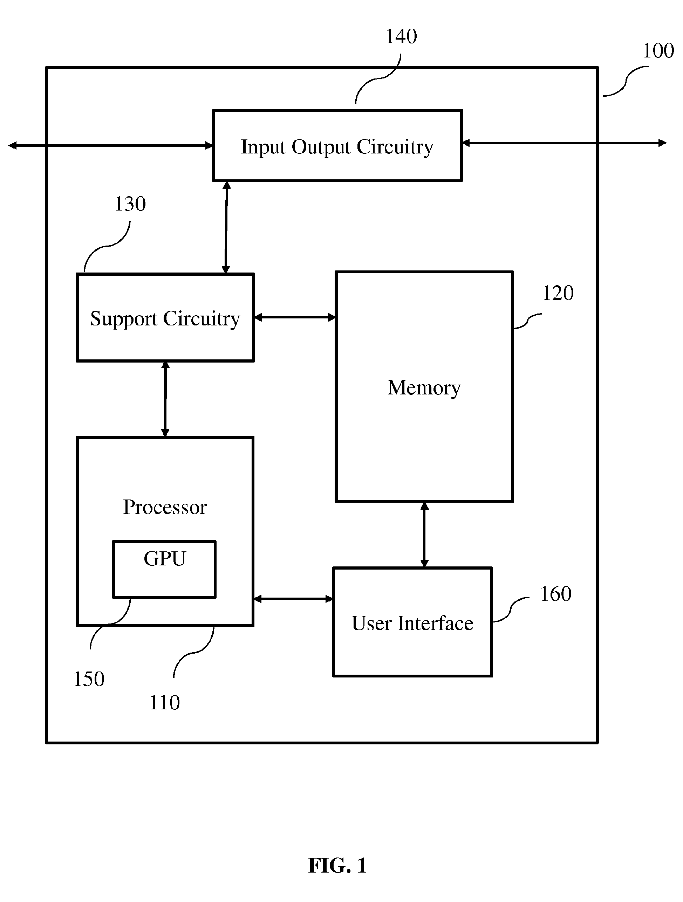

FIG. 1 depicts a high level block diagram of a rendering device 100 for implementing the features of the present principles in accordance with an embodiment of the present principles. The rendering device 100 of FIG. 1 illustratively comprises a processor 110 as well as a memory 120 for storing control programs, instructions, software, video content, data and the like. The processor 110 cooperates with conventional support circuitry 130 such as power supplies, clock circuits, cache memory and the like as well as circuits that assist in executing the control programs and/or software routines stored in the memory 120. As such, it is contemplated that some of the process steps discussed herein as software processes may be implemented within hardware, for example, as circuitry that cooperates with the processor 110 to perform various steps. The rendering device 100 of FIG. 1 also includes input-output circuitry 140 that forms an interface between the various respective functional elements communicating with the rendering device 100. In various embodiments of the present principles, the rendering device 100 can include a GPU (Graphical Processor Unit) 150 to increase performance. In addition, in various embodiments of the present principles the rendering device 100 of FIG. 1 can further include a user interface 160 which includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

Although the rendering device 100 of FIG. 1 is depicted as a general purpose computer that is programmed to perform various control functions in accordance with the present principles and thus making the rendering device 100 a specialized computing device, the invention can be implemented in hardware, for example, as an application specified integrated circuit (ASIC). As such, the process steps described herein are intended to be broadly interpreted as being equivalently performed by software, hardware, or a combination thereof.

Embodiments of the device of the present principles such as the rendering device 100 of FIG. 1 is adapted for processing such a glossy part in reflection (which concerns a specular component), in transmission, or in both reflection and transmission. It is particularly appropriate for glossy surfaces (in reflection and/or in transmission), but can also be relevant to various kinds of surfaces. In the general situation in reflection, the radiation including typically an ambient component, a diffusion component and a specular component; embodiments of the device are directed at least to the latter.

In addition, embodiments of the device are configured for estimating the glossy part of a radiation at a specific surface point and directed to a specific view direction. In one embodiment of the present principles, the device is adapted to determine a radiance at the considered point in the considered direction (which consists in a light flux density per unit solid angle per unit area), for a quantity of radiance being either emitted from the considered surface or passing through it. In particular implementations, the device is also adapted to determine a spectral radiance (radiance per frequency or wavelength).

In one embodiment of the present principles, the device is also configured for processing multiple surface points and view directions, advantageously at least in part in parallel. Various embodiments include GPU rendering systems, adapted to evaluate the radiance of glossy surfaces illuminated by area lights. More specifically, the device is then advantageously implemented in a programmable rendering pipeline, either in a fragment shader (in charge of processing fragments generated by a rasterizer) or alternatively in a computing kernel involving any language with GPU parallel computing capabilities, such as notably Compute Shader, CUDA (Compute Unified Device Architecture) or OpenCL (Open Computing Language). Various embodiments include production renderers and games engines. Embodiments of the device of the present principles are further advantageously exploited for real-time rendering and/or with soft shadow techniques based on shadow silhouette casting.

In addition, in various embodiments of the present principles, embodiments of the device are adapted for computing a luminance (luminous intensity per unit area of light traveling in a particular direction, which takes into account a luminosity function pertaining to the sensitivity of a human eye to different wavelengths). In various embodiments of the present principles, the device comprises an apparatus, or a physical part of an apparatus, designed, configured and/or adapted for performing the features of the present principles. In alternative embodiments, a device of the present principles can be embodied as a set of apparatus or physical parts of apparatus, whether grouped in a same machine or in different, possibly remote, machines.

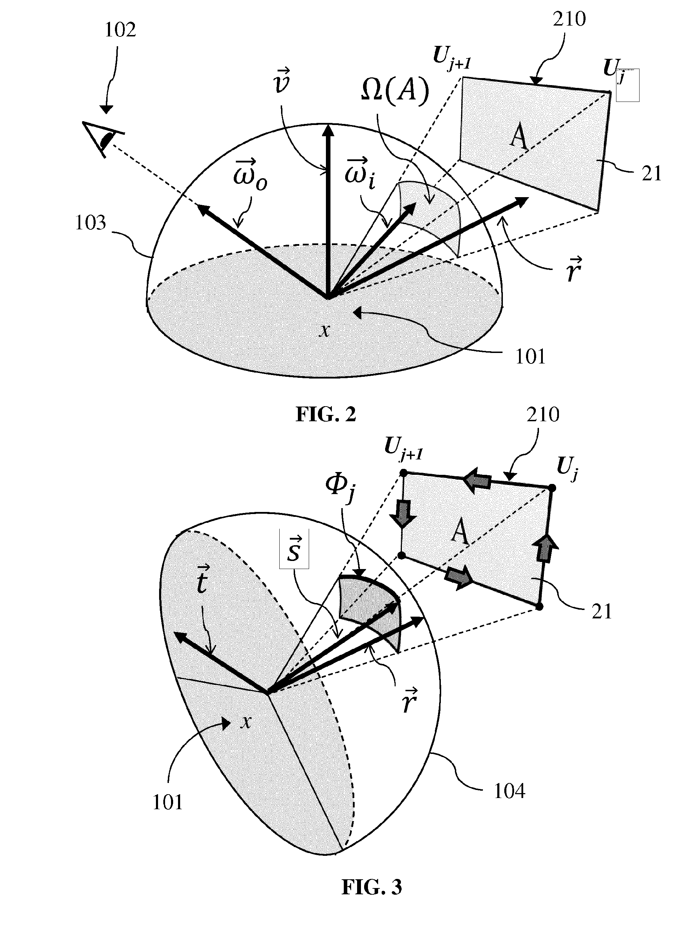

FIG. 2 depicts a physical configuration of a surface, in which area light illumination (specular component) can be determined in accordance with an embodiment of the present principles. FIG. 3 depicts the physical configuration of FIG. 2 including mathematical expressions implemented in determining area light illumination in accordance with an embodiment of the present principles. Referring to FIG. 2 and FIG. 3, a point $x$, 101, is lying on an object lighted by an area light source 21 having a light source surface $A$. That object has a surface at point $x$ which is normal to a unit vector $\vec{v}$. The considered point $x$ may notably correspond to a fragment processed in a rendering pipeline.

The source surface $A$ is bounded by edges 210 forming a polygonal shape - a rectangle on the represented example. Though the device 1 could be applied to various shapes of light source surfaces, a representation by such a polygonal shape is preferred and possibly leads to particularly efficient and reliable computations in best implementations.

The directions from the light source 21 to the point $x$ are given by an opposite unit vector $\vec{\omega_i}$ ("i" for "incoming"), running towards the source surface $A$. Also, a unit hemisphere 103 is defined around point $x$ and normal vector $\vec{v}$. The source surface $A$ is projected onto that hemisphere 103 into a spherical projection associated with a solid angle $\Omega(A)$ - since surface $A$ is a polygon, its spherical projection is a spherical polygon, the edges of which are great arcs (i.e. segments of great circles). Radiance of the light source 21 at point $M$ (from light surface $A$) from direction $\vec{\omega_i}$ is noted $L_A(x, \vec{\omega_i})$.

A viewing direction towards an observer 102 is defined through a unit vector $\vec{\omega_o}$ ("o" for "outgoing"). Therefrom, a unit vector $\vec{r}$ is considered, which represents the reflection of the viewing direction $\vec{\omega_o}$ against a tangent plane corresponding to the surface at point $x$. Namely, vector $\vec{r}$ is derived from vector $\vec{\omega_o}$ by an application of the Householder matrix $[\mathbf{I}-2\vec{v}\,\vec{v}^T]$, where $\mathbf{I}$ is the identity matrix and "T" designates a transposition.

The reflectance properties of the lightened surface at point x, depending on the surface material, are represented by a BRDF function (bidirectional reflection distribution function) *noted fr* $(x, \vec{\omega_e}, \vec{\omega_o})$. As well known to a person skilled in the art, a BRDF function relates radiance incident at a point on a surface to radiance reflected from that point. The radiance $L(x, \vec{\omega_o})$ scattered at point $x$ towards observer 102 (color perceived by the eye) is then defined by a hemispherical integral over the solid angle $\Omega(A)$ sustained by the light source surface A according to equation one (1), which follows:

$$L(x,\vec{\omega_o}) = \int_{\Omega(A)} L(x,\vec{\omega_l})\, f_r(\vec{\omega_l},x,\vec{\omega_o})\, (\vec{\omega_l}\cdot\vec{n})\, d\omega_l \qquad (1)$$

where $fr(\vec{\omega_i},x,\vec{\omega_o})$ represents the bi-directional reflectance distribution function (brdf) characterizing the surface material and $L(x,\vec{\omega_i})$ represents the radiance of the area light emitter.

In the following, only the specular component will be considered, since it is relevant to the glossy (or specular) part of the radiation reflected by the surface. In particular situations, the considered surface is itself glossy (or nearly specular), so that the radiation is identified with its glossy part for the computations. The glossy component of the representation accounts for the fact that the considered surface is not perfectly smooth, so that reflection of light does not obey Snell's law. Instead, the related reflected light has a distribution about a preferred direction of specularly reflected light. The concentration of that distribution is expressed by the shininess coefficient $n$, also called Phong or specular-reflection exponent, controlling the glossiness.

By noting $\rho_s$ a specular reflectivity, which provides a ratio of reflection of the specular term of incoming light, and supposing that this term is constant at point $x$ (at least for a given color channel) as usually done in the Phong model, glossy surfaces can be represented by a Phong distribution function according to the two representations of equation two (2), which follows:

$$f_{r1}(\vec{\omega}_i, x, \vec{\omega}_0) = \rho_s \frac{n+1}{2\pi} \frac{(\vec{\omega}_i \cdot \vec{r})^n}{\vec{\omega}_i \cdot \vec{n}} \quad \text{and} \quad f_{r2}(\vec{\omega}_i, x, \vec{\omega}_0) = \rho_s \frac{n+2}{2\pi} (\vec{\omega}_i \cdot \vec{r})^n \tag{2}$$

where $\vec{r}$ represents the viewing direction reflected against the surface, $\vec{n}$ represents the surface normal, $n$ represents the Phong exponent that controls the glossiness and $fr_1$ and $fr_2$ are respectively the one and the two axis Phong distribution model. That is, when using $fr_1$ in equation (1), the integrand is reduced to a single axis oriented cosine lobe distribution (wi.n)^n. When using $fr_2$, the integrand is the product of two axis lobe distribution (wi.n)^n (wi.n).

The light source surface $A$ being polygonal and having $m$ edges 210, the 2D surface integral of equation (1) can be expressed as a summation of a 1D contour integral around the edges 210. This is primarily based on the Stokes theorem. Accordingly, for each of the *oriented m* edges 210, such as $U_jU_{j+1}$, a unit vector $\vec{s}$ can be defined, pointing from point $x$ to a first vertex $U_j$ of edge $U_jU_{j+1}$, as well as a unit vector $\vec{t}$, orthogonal to vector $\vec{s}$ and in the plane of the edge $U_jU_{j+1}$, so that $(\vec{s}, \vec{t})$ constitutes an orthonormal basis. This is used for defining for edge $U_jU_{j+1}$, the parameters (keeping in mind that $\vec{s}$ and $\vec{t}$ depend on the considered edge 210). Further, an edge aperture $\Phi$ is defined as the angle opening corresponding to edge $U_jU_{j+1}$, as projected onto a hemisphere 104 around point $x$ and direction $\vec{r}$. Also, unit normal vectors $\vec{n}_j$ are defined as normal and external to the boundary of source surface $A$, i.e. to the edges 210, and tangent to the hemisphere 104.

That is, the area light source is represented by a polygonal surface defined by $m$ edges with radiance $L_A$. The double integral can then be reduced to one dimension integrals using contour integration according to equation three (3) and equation four (4), which follow:

$$L(x, \vec{\omega}_o) = \rho_s \frac{L_A}{2\pi} \begin{cases} \sum_{i=1}^{m} (\vec{q}_i \cdot \vec{r}) F(\Phi_i, a_i, b_i, n-1) & \text{if n odd} \\ \\ \Omega(A) + \sum_{i=1}^{m} (\vec{q}_i \cdot \vec{r}) F(\Phi_i, a_i, b_i, n-1) & \text{if n even} \end{cases} \tag{3}$$

$$F(x, a, b, n) = F(x, c, \delta, n) = \int_{-\delta}^{x-\delta} \frac{(c\cos(\phi))^{n+2} - f(\phi, c, n)}{(c\cos(\phi))^2 - 1} d\phi \tag{4}$$

with $c = \sqrt{a^2 + b^2}$, $\delta = \arctan(b/a)$, $a = \vec{r} \cdot \vec{s}_i$, and $b = \vec{r} \cdot \vec{t}_i$, where $\vec{s}_i$ and $\vec{t}_i$ are normalized orthonormal vectors in the plane of the edge $U_iU_{i+1}$ with normal $\vec{q}_i$, $\vec{s}_i$ pointing toward the first vertex $U_i$ as depicted in FIG. 1b, and

$$f(\phi, c, n) = \begin{cases} c\cos(\phi) & \text{if n odd} \\ 1.0 & \text{if n even} \end{cases}$$

.

It had been previously demonstrated by the inventors that $F$ integrand, denoted $I$, can be accurately approximated by a sum of 3 shifted peak functions, $P$, with known derivatives according to equation five (5), which follows:

$$I(\phi, c, n) \approx \tilde{I}(\phi, c, n) = \begin{cases} \text{sNorm}\left(P(\phi, c, n) - P(\phi - \pi, c, n) - P(\phi + \pi, c, n) - \text{vShift}\right) & \text{if n odd} \\ \\ \text{sNorm}\left(P(\phi, c, n) + P(\phi - \pi, c, n) + P(\phi + \pi, c, n) - \text{vShift}\right) + 1 & \text{if n even} \end{cases} \tag{5}$$

In such implementations, the highest accuracy was achieved using a linearly blend of a Lorentzian peak function approximation $I_L$ and a Pearson function approximation $I_P$.

The computation of the 3 integral terms, according to equation six (6), which follows, has however a non-negligible cost that limits the rendering performances.

$$\tilde{F}(x,c,\delta,n) = \begin{cases} \mathrm{sNorm}\left(\int_{-\delta}^{x-\delta} P(\phi,c,n) - \int_{-\delta-\pi}^{x-\delta-\pi} P(\phi,c,n) - \int_{-\delta+\pi}^{x-\delta+\pi} P(\phi,c,n) - x\,\mathrm{vShift}\right) & \text{if n odd} \\ \mathrm{sNorm}\left(\int_{-\delta}^{x-\delta} P(\phi,c,n) + \int_{-\delta-\pi}^{x-\delta-\pi} P(\phi,c,n) + \int_{-\delta+\pi}^{x-\delta+\pi} P(\phi,c,n) - x\,\mathrm{vShift}\right) + x & \text{if n even} \end{cases} \tag{6}$$

In accordance with the present principles, the performance of the method described above can be improved by implementing a new set of peak functions that provides the highest accuracy but at the cost of only one term evaluation.

Light leaks observed using a first term integral in the method described above come from a bad curve fitting in the tail of *I*. Precisely, the *I* derivatives at the bounds of the integration domain $\left[-\frac{\pi}{2}, \frac{\pi}{2}\right]$ for embodiments of the present principles is always 0 whereas it is not true for the Lorentzian and Pearson approximations. Even worse, the error is compounded by the vertical offset and scaling operations. The use of ellipsoid based functions in accordance with the present principles solves this problem with null first derivative in the domain bounds invariant to scaling and translation operations.

In accordance with an embodiment of the present principles, the ellipsoid peak function is built upon the parametrization, (*r*,ϕ), of an ellipse with eccentricity *a* in the 2D plane as follows:

$$x^2 + \frac{y^2}{a^2} = 1 \quad \text{and} \quad \begin{cases} x &= r\cos(\phi) \\ y &= r\sin(\phi) \end{cases}$$

The ellipsoid function, *E*, then corresponds to the variation of r driven by angle ϕ and defined according to equation seven (7), which follows:

$$E(\phi) = r(\phi) = \frac{a^2}{1 + (a^2 - 1)cos^2(\phi)} \tag{7}$$

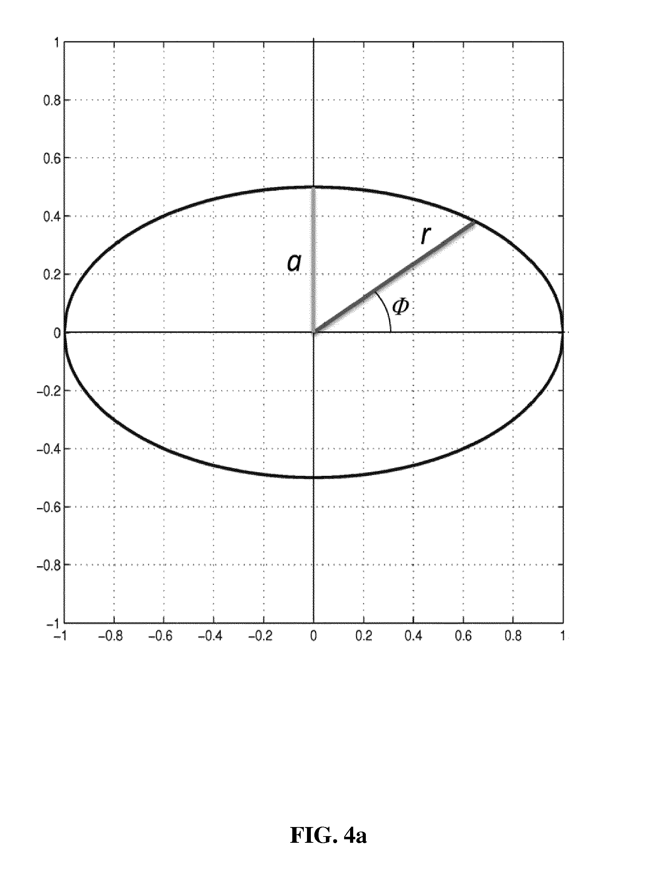

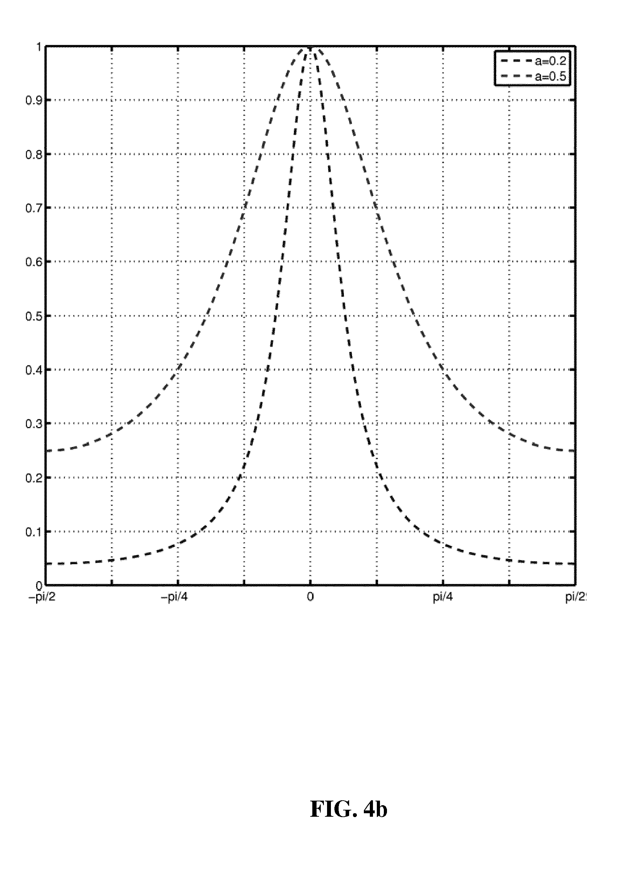

FIG. 4a depicts a graphical representation of an ellipse parameterization and FIG. 4b depicts a graphical representation of an ellipsoid based peak function in accordance with an embodiment of the present principles.

In one embodiment of the present principles, the full solution works using a linear combination of approximation based on ellipsoid *E* and *E*² functions as characterized according to equation eight (8), which follows:

$$I(\phi,c,n) \approx \tilde{I}(\phi,c,n) = \begin{cases} \mathrm{sNorm}\left(P(\phi,c,n) - \mathrm{vShift}\right) & \text{if n odd} \\ \mathrm{sNorm}\left(P(\phi,c,n) - \mathrm{vShift}\right) + 1 & \text{if n even} \end{cases} \tag{8}$$

with

$$\mathrm{vShift} = P\left(\frac{\pi}{2}, c, n\right) \quad \text{and} \quad \mathrm{sNorm} = \frac{s}{1 - \mathrm{vShift}}.$$

The main difference is that only the first integral term evaluation is required, maximizing the rendering performance and providing the best accuracy at the same time.

Two ellipsoids, $P_E$ and $P_E{}^2$, and the 2 approximations, $\tilde{I_E}$ and $\tilde{I_E}^2$ are defined according to equation (8), above.

$P_E$ is the standard ellipsoid function defined according to equation nine (9), which follows:

$$P_E(\phi,c,n) = \frac{a}{1+(a-1)\cos(\phi)^2} \quad \text{with} \quad \int P_E(\phi,c,n) = \sqrt{a}\tan^{-1}\left(\frac{\tan\phi}{\sqrt{a}}\right) \qquad (9)$$

$I_E$ is set to have the same width of $I$ using the empirical half width prediction formula $x_w$ and determined according to equation ten (10), which follows:

$$P_E(x_w,c,n) = \frac{I(x_w,c,n)}{s} \quad \Rightarrow \quad a = \frac{I(x_w,c,n)\left(1-\cos^2(x_w)\right)}{\cos^2(x_w)\left(s - I(x_w,c,n)\right)} \qquad (10)$$

A second approximation, $I_E{}^2$, with a shorter tail is defined to provide a good framing of $I$ in the tail. The shorter tail for $I_E{}^2$ is obtained using a square elevation of the ellipsoid function $E$, noted $P_E{}^2$ and defined according to equation eleven (11), which follows:

$$P_{E^2}(\phi,c,n) = \left(\frac{a}{1+(a-1)\cos(\phi)^2}\right)^2 \quad \text{with} \quad \int P_{E^2}(\phi,c,n) = \frac{\sqrt{a}\left(c(a+1)\tan^{-1}\left(\frac{\tan\phi}{\sqrt{a}}\right) - (a-1)\sqrt{a}\sin(2\phi)\right)}{2c} \qquad (11)$$

with

$$c = (a-1)\cos(2\phi) + a + 1$$

$I_E{}^2$ is then set to have the same width of $I$ using the empirical half width prediction formula $x_w$ and determined according to equation twelve (12), which follows:

$$P_{E^2}(x_w + \text{bias}, c, n) = \frac{I(x_w,c,n)}{s} \quad \Rightarrow \quad a = \frac{\sqrt{I(x_w,c,n)}\left(1-\cos^2(x_w + \text{bias})\right)}{\sqrt{s} - \sqrt{I(x_w,c,n)}\cos^2(x_w + \text{bias})} \qquad (12)$$

with

$$\text{bias} = 0.5278\,(x_w)^{4.8}$$

The full solution is then obtained using a linear combination of the two edges integral weighted by $\alpha$ for best fitting in the tail and defined according to equations thirteen (13) and fourteen (14), which follow:

$$F(x,c,\delta,n) \approx \tilde{F}(x,c,\delta,n) = \alpha\tilde{F}_E + (\alpha-1)\tilde{F}_{E^2} \qquad (13)$$

with

$$\tilde{F}_\#(x,c,\delta,n) = \int_{-\delta}^{x-\delta}\tilde{I}_\#(\phi,c,n) = \begin{cases} \text{sNorm}\left(\int_{-\delta}^{x-\delta}P_\#(\phi,c,n) - x\,\text{vShift}\right) & \text{if n odd} \\[2ex] \text{sNorm}\left(\int_{-\delta}^{x-\delta}P_\#(\phi,c,n) - x\,\text{vShift}\right) + x & \text{if n even} \end{cases} \qquad (14)$$

In various embodiments of the present principles, a programmable rendering pipeline present in, for example, a modern GPU (Graphics Processing Unit) is used to evaluate the radiance of glossy surfaces illuminated by area lights in accordance with the present principles and as described above. In such embodiments, the solution is implemented in a fragment shader or any language with GPU parallel computing capabilities (Compute Shader, CUDA, OpenCL, ...).

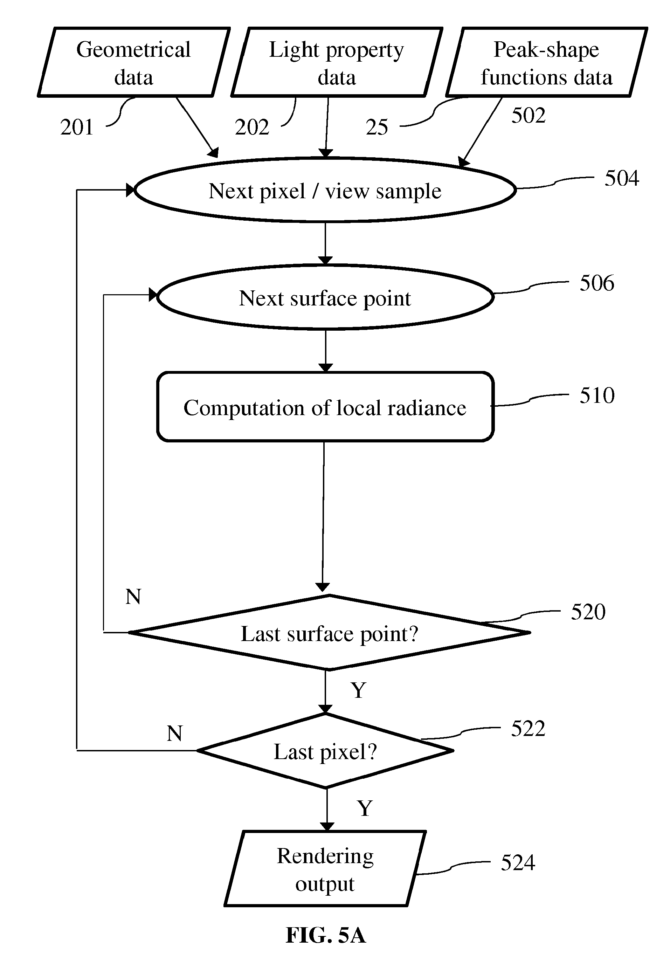

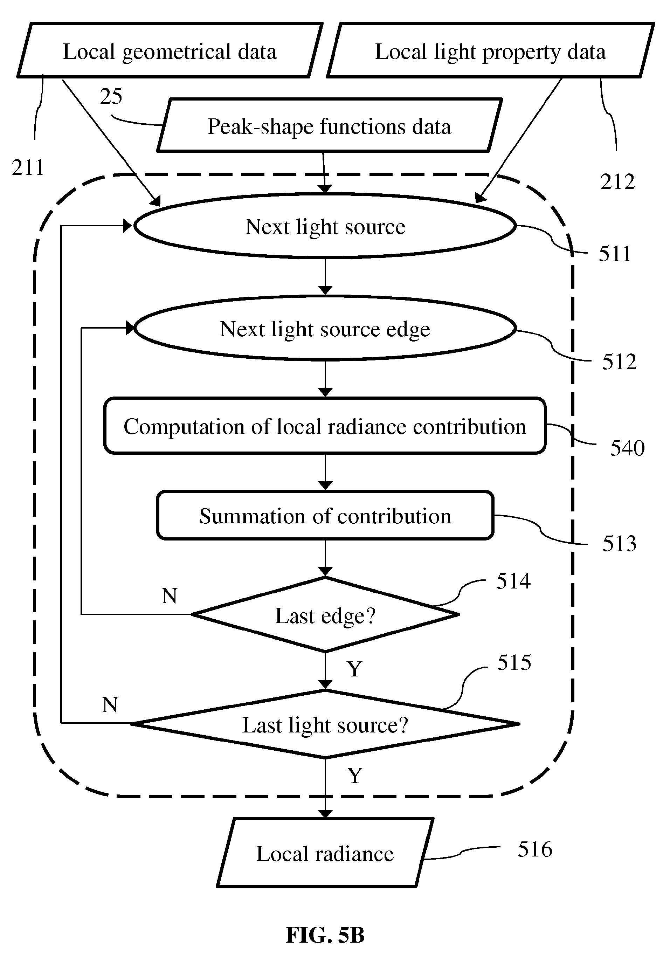

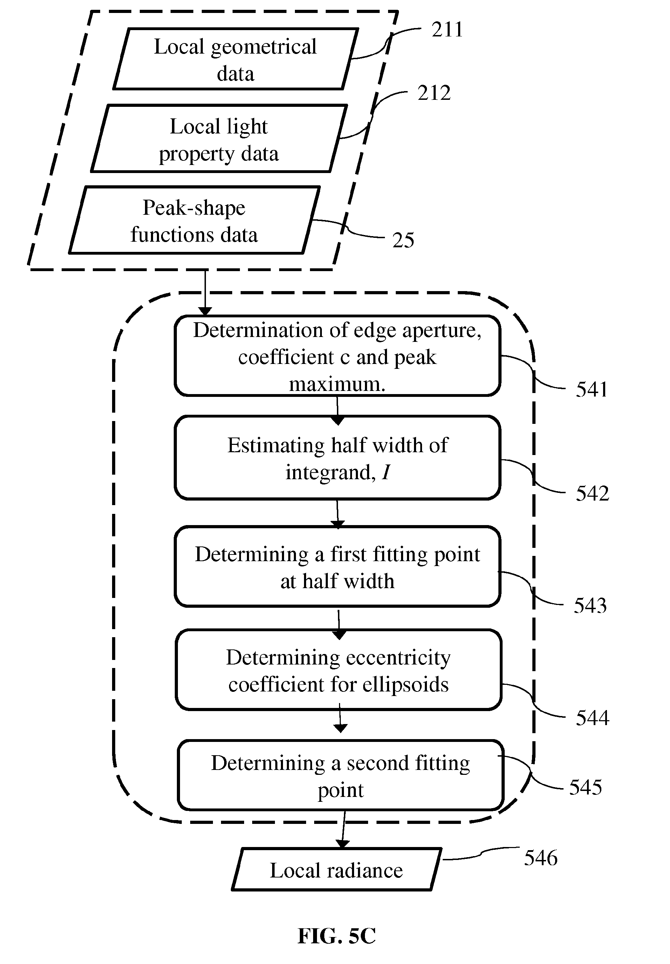

For example, FIG. 5a, 5b and 5c depict flow diagrams of a process for determining accurate area light illumination using ellipsoid based functions in accordance with an embodiment of the present principles. The method 500 begins at step 502 during which information such as geometrical data 201 and light property data 202 received from, for example, a memory (120, described above with respect to FIG. 1) and ellipsoid based peak-shape functions data provided by, for example, user inputs or default options. The method 500 can then proceed to step 504.

At step 504, a next pixel or view sample is considered, which can be advantageously processed in parallel for various pixels. A next surface point x is also processed for the current pixel at step 506, in compliance with known rendering processes. The local radiance at point x for the considered pixel, which is associated with a viewing direction, is then computed at step 510, as described above and summed up hereinafter. Further surface points (step 520) and further pixels (step 522) are dealt with until the whole set has been processed, and the complete rendering output is available (step 524), which is reiterated for moving images.

The step 510 of computation of local radiance includes more specifically the following steps as depicted in FIG. 5b. The computation is based on local geometrical data 211 and local light property data 212 (including notably the glossiness exponent $n$) that are derived from the geometrical data 201 and light property data 202 through the pending consideration of given surface point and viewing direction, and on the peak-shape functions data 25.

A next light source relevant to the current surface point is considered at step 511, and a next light source edge of that light source is considered at step 512. The computation of local radiance contribution for that light source edge is then effected at step 540, and that contribution is summed to the other contributions (over the light source edges and light sources, for the pending surface point and viewing direction) at step 513. Those operations are effected until all edges of the current light source have been processed (step 514), and until all relevant light source have been considered (step 515). The local radiance is thereby obtained at step 516.

The step 540 of computation of local radiance contribution includes more specifically the following steps as depicted in FIG. 5c. At step 541, an edge aperture $\Phi_i$, coefficient c and location of peak maximum $\delta$ are determined. In one embodiment of the present principles and as described above with respect to equation (4), these coefficients are computed from the geometric configuration of the edge (e.g., spherical edge) in the hemisphere of integration. More specifically, in one embodiment the peak maximum $\delta$ is determined as a peak function with maximum at abscissa phi=delta. That is, in one embodiment of the present principles, a rendering/processing device of the present principles is configured for approximating the integrand function(s) by using parameters representative of those maximal height, peak abscissa(s).

At step 542, the half width, $xw$, of integrand $I$ is estimated according to $c$ and $n$ as described above. At step 543, a first fitting point is determined at the half width, $xw$, of $I$. At step 544, eccentricity coefficient $a$ for ellipsoids $P_E$ and $P_E^2$ is determined. For example and as described above, in one embodiment of the present principles the coefficient $a$ for ellipsoid peak shape functions $P_E$ and $P_E^2$ is determined using equations 9 and 11, above.

At step 545, a second fitting point is used to determine a weighting factor $\alpha$ for best fitting in the tail of the ellipsoid based peak function. For example and as described above, in one embodiment of the present principles, the second fitting point is at tail $x_{tail}$ of $I$. At step 546, a local radiance contribution is determined using a linear combination of the two edges integral weighted by $\alpha$ for best fitting in the tail. For example and as described above, in one embodiment of the present principles, the solution is determined using equations 13 and 14, above.

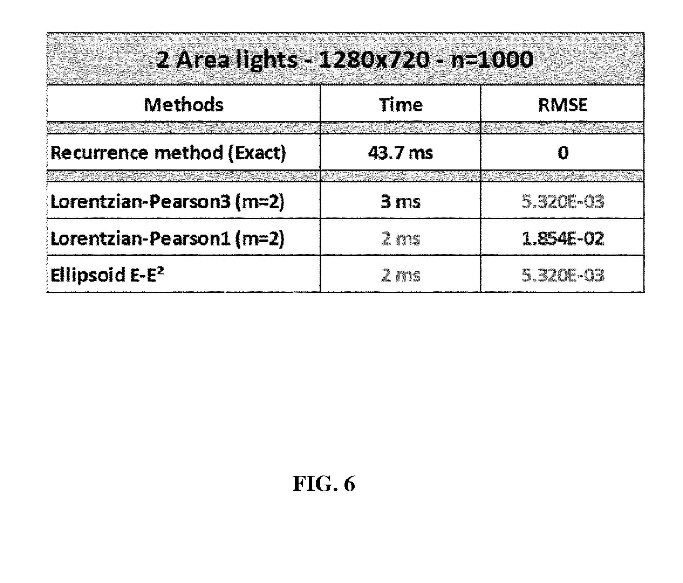

In test comparisons with a recurrence method giving reference results (which correspond to an exact solution), timing and error measurements (Root Mean Square Error) show that solutions for determining area light illumination in accordance with embodiments of the present principles outperform the recurrence method in many scenarios. For example, FIG. 6 depicts a table including rendering times and error measurements (e.g., Root Mean Square Error) obtained with the ellipsoid approximations of the present principles compared to an exact solution (recurrence method) and approximation methods including the Lorentzian-Pearson 3 method and the Lorentzian-Pearson 1 method for a specular sphere scene illuminated by two area lights.

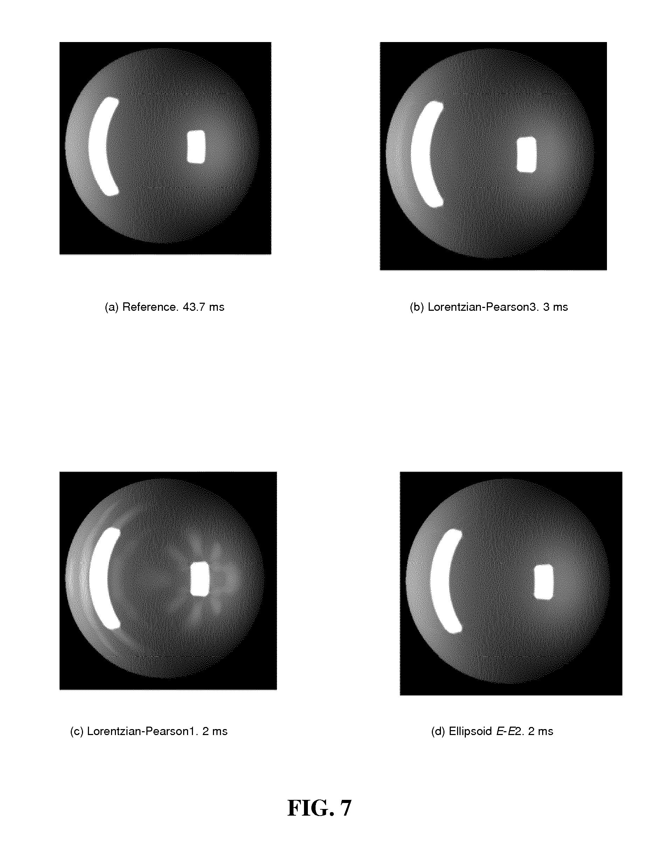

FIG. 7 depicts the corresponding rendered images of the illuminated sphere of FIG. 6 using the named solutions. As depicted in FIG. 7, FIG. 7a depicts an image of the specular sphere of FIG. 6 having been rendered using a reference model solution that took 43.7ms to render and depicts an accurate representation of the specular sphere illuminated using two area lights. FIG. 7b depicts an image of the specular sphere of FIG. 6 having been rendered using a Lorentzian-Pearson3 model solution that looks similar to the reference solution and that took 3ms to render. FIG. 7c depicts an image of the specular sphere of FIG. 6 having been rendered using a Lorentzian-Pearson1 model solution that although only took 2ms to render exhibits a great deal of light leaks. FIG. 7d depicts an image of the specular sphere of FIG. 6 having been rendered using an ellipsoid based approximation of the present principles. As depicted in 7d, the solution of the present principles render an image most accurate to the specular sphere being illuminated by two area lights and only took 2ms to render. As evidenced by the results of FIG. 6 and FIG. 7, the ellipsoid based method of the present principles provides the best performance with the highest accuracy.

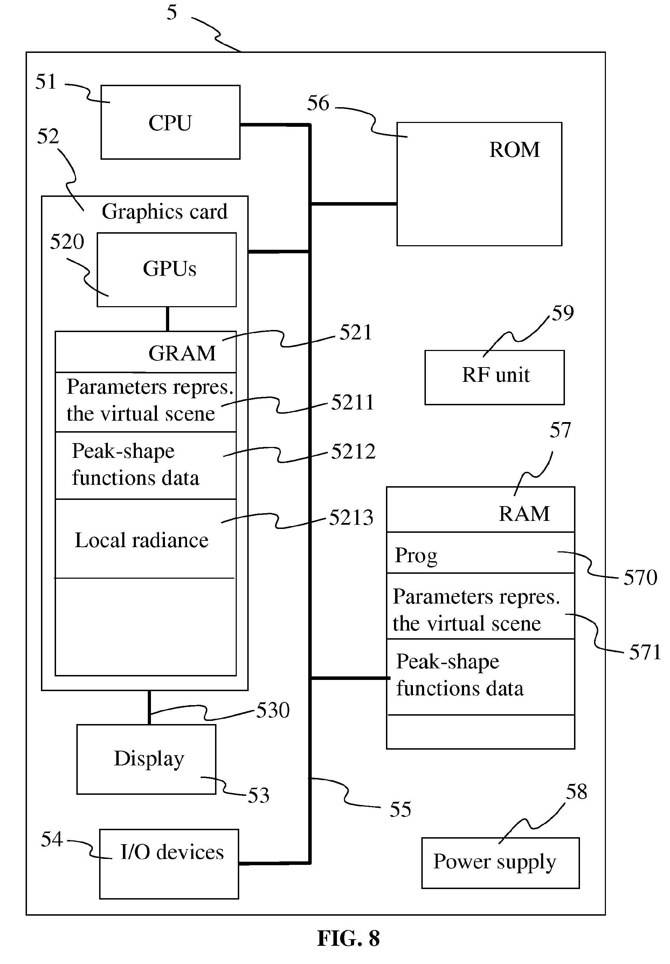

FIG. 8 depicts a high level block diagram of a rendering device for implementing the features of the present principles in accordance with an alternate embodiment of the present principles. The rendering device 800 of FIG. 8 can illustratively comprise a personal computer (PC), a laptop, a tablet, a smartphone or a games console - such as a specialized games console producing and displaying images live. The rendering device 800 of FIG. 8 illustratively comprises the following elements, connected to each other by a bus 55 of addresses and data that also transports a clock signal:

- a microprocessor 51 (or CPU) ;
- a graphics card 52 comprising several Graphical Processor Units (or GPUs) 520 and a Graphical Random Access Memory (GRAM) 521;
- a non-volatile memory of ROM (Read Only Memory) type 56;
- a Random Access Memory or RAM 57;
- one or several I/O (Input/Output) devices 54 such as for example a keyboard, a mouse, a joystick, a webcam; other modes for introduction of commands such as for example vocal recognition are also possible;
- a power source 58 ; and
- a radiofrequency unit 59.

The rendering device 800 also illustratively comprises a display device 53 of display screen type directly connected to the graphics card 52 to display synthesized images calculated and composed in the graphics card, for example live. The use of a dedicated bus to connect the display device 53 to the graphics card 52 offers the advantage of having much greater data transmission bitrates and thus reducing the latency time for the displaying of images composed by the graphics card. According to an alternate embodiment, a display device is external to rendering device 800 and is connected thereto by a cable or wirelessly for transmitting the display signals. In the rendering device 800, for example the graphics card 52, comprises an interface for transmission or connection adapted to transmit a display signal to an external display means such as for example an LCD or plasma screen or a video-projector. In this respect, the RF unit 59 can be used for wireless transmissions.

It should be noted that the word "register" used in the description of memories 521, 56, and 57 designates in each of the memories mentioned, both a memory zone of low capacity (some binary data) as well as a memory zone of large capacity (enabling a whole program to be stored or all or part of the data representative of data calculated or to be displayed). Also, the registers represented for GRAM 521 can be arranged and constituted in any manner, and each of them does not necessarily correspond to adjacent memory locations and can be distributed otherwise (which covers notably the situation in which one register includes several smaller registers). When switched-on, the microprocessor 51 loads and executes the instructions of the program contained in the RAM 57.

In the rendering device 800 of FIG. 8, the random access memory 57 illustratively comprises:

- in a register 570, the operating program of the microprocessor 51 responsible for switching on the apparatus 5,
- in a register 571, parameters representative of the scene (for example modelling parameters of the object(s) of the scene, lighting parameters of the scene);
- in a register 572, peak-shape functions data exploited for estimating the radiations.

The algorithms implementing the steps of the method specific to the present principles and described above are stored in a memory and for example the memory GRAM 521 of the graphics card 52 associated with the rendering device 800 implementing the features of the present principles. When switched on and once the parameters 571 and 572 representative of the environment and peak-shape functions data are loaded into the RAM 57, the graphic processors 520 of graphics card 52 load those parameters into the GRAM 521 and execute the instructions of those algorithms in the form of microprograms of "shader" type using HLSL (High Level Shader Language) language or GLSL (OpenGL Shading Language) for example.

In the rendering device 800 of FIG. 8, the random access memory GRAM 521 illustratively comprises:

- in a register 5211, the parameters representative of the scene,
- in a register 5212, the loaded peak-shape functions data,
- in a register 5213, local radiance computed in the frame of the rendering operations.

According to an alternate embodiment of the present principles, at least some of the data pertaining to primitives are stored in the RAM 57 and processed by the microprocessor 51. Such an embodiment however causes greater latency time in the composition of an image comprising a representation of the environment composed from microprograms contained in the GPUs 520 as the data must be transmitted from the graphics card to the random access memory 57 passing by the bus 55, for which the transmission capacities are generally inferior to those available in the graphics card for transmission of data from the GPUs 520 to the GRAM 521 and vice-versa.

According to an alternate embodiment of the present principles, the power supply 58 is external to the rendering device 800.

Having described various embodiments for a method and apparatus for determining area light illumination using ellipsoid-based functions (which are intended to be illustrative and not limiting), it is noted that modifications and variations can be made by persons skilled in the art in light of the above teachings. It is therefore to be understood that changes may be made in the particular embodiments of the present principles disclosed which are within the scope of the invention. While the forgoing is directed to various embodiments of the present principles, other and further embodiments of the present principles may be devised without departing from the basic scope thereof.

**Claims**

1. A method for estimating a glossy part ($L$) of a radiation coming from a surface illuminated by at least one area light source (21) having at least one source surface ($A$) bounded by edge curves (210, $U_jU_{j+1}$), said method comprising:

   approximating at least one integrand function ($I$) by means of at least one ellipsoid-based-peak-shape function ($P$) having a null first derivative in the integration domain bounds $\left[-\frac{\pi}{2}, \frac{\pi}{2}\right]$; and

   computing said glossy part ($L$) from analytical expressions associated with integrations of said at least one ellipsoid-based-peak-shape function ($P$) along said edge curves (210, $U_jU_{j+1}$) weighted by a factor ($\alpha$) for best fitting in the tail ($x_{tail}$ of $I$).

2. The method of claim 1 wherein said computing said glossy part ($L$) comprises:

   determining an edge aperture ($\Phi_i$) coefficient ($c$) and location of peak maximum ($\delta$) from the geometric configuration of the edge in the hemisphere of integration;
   estimating a half width ($xw$) of the at least one integrand function ($I$) according to edge aperture ($\Phi_i$) coefficient ($c$) and a glossiness exponent ($n$);
   determining a first fitting point at the half width ($xw$) of the at least one integrand function ($I$);
   determining an eccentricity coefficient ($a$) for ellipsoids ($P_E$ and $P_E^2$) determined from the ellipsoid-based-peak-shape function ($P$);
   determining a weighting factor ($\alpha$) for best fitting in the tail of the ellipsoid-based-peak-shape function ($P$) using a second fitting point ($x_{tail}$ of $I$); and
   determining the glossy part ($L$) using a linear combination of two edges integral weighted by a factor ($\alpha$).

3. The method of claim 1, wherein said glossy part ($L$) corresponds to a specular term ($f_{r1}$, $f_{r2}$) of a Phong reflection model.

4. The method of claim 1, wherein said at least one area light source (21) comprises a polygonal shape and said edge curves (210, $U_jU_{j+1}$) are straight lines.

5. The method of claim 1, wherein said approximating at least one integrand function ($I$), comprises:

   using a linear combination of approximations based on ellipsoid functions ($E$, $E^2$).

6. An apparatus (100, 800) for estimating a glossy part ($L$) of a radiation coming from a surface illuminated by at least one area light source (21) having at least one source surface ($A$) bounded by edge curves (210, $U_jU_{j+1}$), said apparatus comprising:

   a memory (120, 56, 57) storing control programs, instructions, software, content and data; and
   a processor (110) executing the control programs and instructions, said processor when executing said control programs causing said apparatus to:

   approximate at least one integrand function ($I$) by means of at least one ellipsoid-based-peak-shape function ($P$) having a null first derivative in the integration domain bounds $\left[-\frac{\pi}{2}, \frac{\pi}{2}\right]$; and

compute said glossy part ($L$) from analytical expressions associated with integrations of said at least one ellipsoid-based-peak-shape function ($P$) along said edge curves (210, $U_jU_{j+1}$) weighted by a factor ($\alpha$) for best fitting in the tail ($x_{\text{tail}}$ of $I$).

7. The apparatus (100, 800) of claim 6, wherein said processor comprises a graphical processor unit (150).

8. The apparatus (100, 800) of claim 6, wherein said processor (110) approximates the at least one integrand function ($I$) using a linear combination of approximations based on ellipsoid functions ($E, E^2$).

9. The apparatus (100, 800) of claim 6, wherein said processor (110) is configured to compute said glossy part ($L$) by:

determining an edge aperture ($\Phi_i$) coefficient ($c$) and location of peak maximum ($\delta$) from the geometric configuration of the edge in the hemisphere of integration;
estimating a half width ($xw$) of the at least one integrand function ($I$) according to edge aperture ($\Phi_i$) coefficient ($c$) and a glossiness exponent ($n$);
determining a first fitting point at the half width ($xw$) of the at least one integrand function ($I$);
determining an eccentricity coefficient ($a$) for ellipsoids ($P_E$ and $PE^2$) determined from the ellipsoid-based-peak-shape function ($P$);
determining a weighting factor ($\alpha$) for best fitting in the tail of the ellipsoid-based-peak-shape function ($P$) using a second fitting point ($x_{\text{tail}}$ of $I$); and
determining the glossy part ($L$) using a linear combination of two edges integral weighted by a factor ($\alpha$).

10. The apparatus (100, 800) of claim 6, wherein said glossy part ($L$) corresponds to a specular term ($f_{r1}, f_{r2}$) of a Phong reflection model.

11. The apparatus (100, 800) of claim 6, wherein said at least one area light source (21) comprises a polygonal shape and said edge curves (210, $U_jU_{j+1}$) are straight lines.

12. Computer program comprising program code instructions executable by a processor for implementing the steps of a method according to at least one of claims 1 to 5.

**FIG. 1**

**FIG. 2**

**FIG. 3**

**FIG. 4a**

**FIG. 4b**

FIG. 5A

**FIG. 5B**

Local geometrical
data — 211

Local light
property data — 212

Peak-shape
functions data — 25

Determination of edge aperture,
coefficient c and peak
maximum. — 541

Estimating half width of
integrand, $I$ — 542

Determining a first fitting point
at half width — 543

Determining eccentricity
coefficient for ellipsoids — 544

Determining a second fitting
point — 545

Local radiance — 546

**FIG. 5C**

| 2 Area lights - 1280x720 - n=1000 | | |
|---|---|---|
| Methods | Time | RMSE |
| Recurrence method (Exact) | 43.7 ms | 0 |
| Lorentzian-Pearson3 (m=2) | 3 ms | 5.320E-03 |
| Lorentzian-Pearson1 (m=2) | 2 ms | 1.854E-02 |
| Ellipsoid E-E$^2$ | 2 ms | 5.320E-03 |

FIG. 6

(a) Reference. 43.7 ms

(b) Lorentzian-Pearson3. 3 ms

(c) Lorentzian-Pearson1. 2 ms

(d) Ellipsoid $E$-$E$2. 2 ms

## FIG. 7

5

51

CPU

52

56

ROM

Graphics card

520

GPUs

59

RF unit

GRAM 521

Parameters repres. the virtual scene 5211

Peak-shape functions data 5212

57

Local radiance 5213

RAM

Prog 570

Parameters repres. the virtual scene 571

Peak-shape functions data

530

Display

53

55

54 I/O devices

58

Power supply

**FIG. 8**

Europäisches
Patentamt

European
Patent Office

Office européen
des brevets

# EUROPEAN SEARCH REPORT

Application Number

EP 15 30 6733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PASCAL LECOCQ ET AL: "Accurate Approximations For Real-Time Specular Area Lighting", ACM SIGGRAPH 2015 TALKS; LOS ANGELES, CA ; AUGUST 09 - 13, 2015, ACM, NEW YORK, NY, USA , 9 August 2015 (2015-08-09), pages 68-1, XP002756261, DOI: 10.1145/2775280.2792522 ISBN: 978-1-4503-3636-9 Retrieved from the Internet: URL:http://pascal.lecocq.home.free.fr/publications/Lecocq15_AreaLights_SiggTalk.pdf [retrieved on 2016-04-06] * the whole document * | 1,6,12 | INV. G06T15/50 |
| A |  | 2-5,7-11 |  |
| A | PAUL GREEN ET AL: "Efficient Reflectance and Visibility Approximations forEnvironment Map Rendering", COMPUTER GRAPHICS FORUM, WILEY-BLACKWELL PUBLISHING LTD, GB , vol. 26, no. 3 1 September 2007 (2007-09-01), pages 495-502, XP002743511, ISSN: 0167-7055, DOI: 10.1111/J.1467-8659.2007.01072.X Retrieved from the Internet: URL:http://people.csail.mit.edu/green/papers/NonLinPreFilt_lowres.pdf [retrieved on 2015-08-19] * abstract * | 1-12 |  |

TECHNICAL FIELDS
SEARCHED (IPC)

G06T

The present search report has been drawn up for all claims

| Place of search | Date of completion of the search | Examiner |
|---|---|---|
| Berlin | 19 May 2016 | dos Santos, Luís |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)